# EUROPÄISCHE PATENTSCHRIFT

(11) **EP 0 883 561 B1**
(45) Veröffentlichungstag und Bekanntmachung des Hinweises auf die Patenterteilung: **03.05.2000**
(21) Anmeldenummer: 97906111.6
(22) Anmeldetag: 22.02.1997
(51) Int. Cl.: B65G 69/10, B65D 88/26

(54) **VERFAHREN UND VORRICHTUNG ZUR VERMINDERUNG VON GERÄUSCHVERURSACHENDEN SCHWINGUNGEN BEI DER ENTLEERUNG VON SILOS**
METHOD AND APPARATUS FOR THE REDUCTION OF NOISE GENERATING VIBRATIONS DURING SILO DISCHARGING
PROCEDURE ET APPAREIL POUR LA REDUCTION DES VIBRATIONS CAUSANT DU BRUIT LORS DE LA VIDAGE DE SILOS

(30) Priorität: 23.02.1996 DE 19606721
(43) Veröffentlichungstag der Anmeldung: 16.12.1998
(73) Patentinhaber: DU PONT DE NEMOURS (DEUTSCHLAND) GMBH, 61343 Bad Homburg v.d.H. (DE)
(72) Erfinder: GLADBACH, Heinrich, Arnold, D-76698 Ubstadt (DE); TEJCHMAN, Jacek, PL-10 Gdynia (PL)
(74) Vertreter: Hilleringmann, Jochen, Dipl.-Ing.
(86) Internationale Anmeldenummer: EP9700856
(87) Internationale Veröffentlichungsnummer: WO9730915

(56) Entgegenhaltungen:
- DE-A- 4 216 853
- FR-A- 1 290 269
- LU-A- 58 526
- US-A- 2 741 464

## Beschreibung

Die Erfindung betrifft ein Verfahren und eine Vorrichtung zur Verminderung von geräuschverursachenden Schwingungen eines Behälters, insbesondere eines Silos, bei der Entnahme von Schüttgut aus dem Behälter.

Zur Lagerung von Schüttgut verwendet man Großspeicher, das sind meist sich vertikal erstreckende Behälter die an einem oberen Ende gefüllt und an einem unteren Ende entleert werden. Derartige Großbehälter, im folgenden als Silo bezeichnet, können beispielsweise aus einer Stahlbetonkonstruktion oder aus einer Metallkonstruktion bestehen. Der Großbehälter wird meist von einer Haltekonstruktion gestützt. Die Form des Großbehälters kann verschieden ausgeführt sein. Meist weist der Behälter ein schaftförmiges und ein trichterförmiges Teil auf. Die eigentliche Bunkerung des Schüttgutes erfolgt im schaftförmigen Teil. Der Querschnitt des Siloschaftes kann beispielsweise kreisförmig oder eckig sein. Die Wand des Siloschaftes ist meist lotrecht. Das trichterförmige Teil dient zur Entnahme des Schüttgutes und kann eine oder mehrere Auslaßöffnungen aufweisen. Es sind verschiedene Trichterformen mit unterschiedlichen Neigungswinkeln bekannt, beispielsweise pyramidenförmige, konische, keilförmige oder asymmetrisch-keilförmige Trichter. Das trichterförmige Teil kann auch durch einen waagerechten Siloboden gebildet werden. Manche Ausführungsformen bestehen aus einer Kombination eines runden Siloschaftes mit einem keilförmigen Trichter.

Das Schüttgut besteht in der Regel aus körnigen, unregelmäßig geformten Teilen oder Teilchen. Es kann aus unterschiedlichen Materialien, wie beispielsweise Kies, Kohlenstaub, Koks, Kunststoffgranulat, Kesselschlacke, bestehen.

Während des Füllens oder des Entleerens des Großbehälters wirken auf die Konstruktion des Silos neben statischen auch dynamische Belastungen. Bei der Entnahme von Schüttgut kann es zu unterschiedlichen Fließprofilen des Schüttgutes im Silo kommen. Abhängig von der Art des Bewegungsvorgangs wirken unterschiedliche Kräfte auf die Silokonstruktion. Es kann sein, daß bei der Entnahme das gesamte Schüttgut im Silo in Bewegung ist. Man spricht in diesem Fall vom sog. Massenfluß. Es kann aber auch sein, daß sich ein Fließprofil mit bevorzugt fließenden Bereichen im Kern des Silos ausbildet. Man spricht dann vom sog. Kernfluß. Im letztgenannten Fall gibt es Zonen, in denen das Schüttgut in Bewegung ist und Zonen, in denen das Schüttgut in Ruhe ist. Der Bewegungsvorgang an der Wand, sowie die Grenzlinie zwischen Ruhe und Bewegung hängt uA von den Schüttguteigenschaften, der Füllhöhe, der Silogeometrie und der Art der Befüllung und Entleerung ab.

Bei der Siloentleerung treten dynamische Effekte im Schüttgut auf, die an der Auslaßöffnung des trichterförmigen Teils entstehen und sich in Form von elastoplastischen Wellen im schaftförmigen Teil des Großbehälters nach oben ausbreiten. Diese dynamischen Effekte werden durch Störungen des freien und ungezwungenen Fließens des Schüttgutes hervorgerufen. Eine Störung freien Fließens stellt beispielsweise eine Auslaßöffnung dar, die kleiner als der Querschnitt des Behälters ist. Bei einem Silo ist dies stets der Fall. Die Einschränkung der Strömung verursacht eine abwechselnde Änderung von Materialdeformationen, von Dilatation zur Kontraktion und umgekehrt. Dies ist mit Verspannungs- und Entspannungseffekten verbunden. Es entstehen dynamische Spannungspulsationen.

Insbesondere bei Massenfluß, wenn also das gesamte Schüttgut im Silo in Bewegung ist, können diese dynamischen Effekte im Schüttgut direkt auf die Wand des Silos übertragen werden und zu Schwingungsanregungen der Wand des Großbehälters führen. Die Silokonstruktion kann in Resonanz geraten. Schwingungsanregungen stellen dynamische Belastungen dar und wirken auf die Behälterkonstruktion nicht nur ermüdend, sondern können diese insgesamt gefährden. Man ist grundsätzlich bestrebt den Entnahmevorgang des Schüttgutes so zu gestalten, daß dynamische Belastungen auf die Silokonstruktion so gering wie möglich sind.

Die Schwingungsanregungen der Silowand können unter bestimmten Gegebenheiten sich auch als höhrbare Schallemission fortpflanzen - es kann zum sogenannten "Silohupen" kommen. Dieses Phänomen tritt oft nur bei bestimmten Eigenschaften des Schüttgutes auf, beispielsweise bei einer bestimmten Teilchengröße und/oder Teilchenhärte bzw einem bestimmten Material des Silogutes. Auch die Temperatur kann die Schallemission beeinflussen. Oft tritt das Phänomen nur bei einer bestimmten Behältergeometrie oder bei einem bestimmten Füllzustand des Behälters in Erscheinung. Es kann sogar vorkommen, daß bei einem Silo das "Silohupen" nur bei der Entnahme eines bestimmten Silogutes auftritt, - oft unvorhersehbar und nur nachts. Insbesondere dann, wenn die Siloanlage in der Nähe eines Wohnbereiches betrieben wird, ist diese Geräuschentwicklung sehr störend. Es können Lautstärken um 100 dBA auftreten was aufwendige Maßnahmen zur Schalldämmung erforderlich machen kann.

Zur Beeinflussung des Fließprofils in Silos sind aktiv und passiv wirkende Vorrichtungen bekannt. Als Beispiel: Ein kegelförmiger Einbau, der im Siloinneren in der Nähe der Auslaßöffnung eingebaut ist, kann die Fließzone eines Kernflußsilos ändern. Ein trichterförmiger Einbau, auch als sog. Binsert bekannt, kann bei bestimmten Siloausführungen Massenfluß des Schüttgutes erzeugen. Mittels eines Entleerungsrohres können Erschütterungen beim Entleeren vermieden werden. Auf derartige Einbauten wirken aber seitens des Schüttgutes große Belastungen, die sich wiederum auf die Silokonstruktion auswirken. Diese Einbauten sind auch technisch aufwendig.

Zur Vergleichmäßigung des Fließprofils ist aus DE 25 02 539 eine Vibrationsvorrichtung bekannt, bei der im trichterförmigen Teil des Silos ein Grundgestell mit einem Käfig elastisch befestigt ist. Grundgestell und Käfig wirken bei Anregung durch einen Rüttelmotor als Zweimassenschwingsystem und lockern das Schüttgut auch in vertikaler Richtung. Eventuelle Brücken, die den Auslaufmassenstrom behindern werden hierdurch zerstört. In DE 41 20 201 ist eine Vorrichtung zur stufenlosen Steuerung des Ausflusses von schwer fließfähigem Schüttgut offengelegt. Der trichterförmige Teil des Silos, der mittels eines elastischen Ringes am Siloschaft befestigt ist, wird in Torsionsschwingungen versetzt und ermöglicht eine stetige Fließbewegung durch die Auslaßöffnung.

Durch Vibrations- oder Rüttelvorrichtungen kann auch in Einzelfällen das og "Silohupen" beeinflußt werden. Der Betrieb von Vibrations- oder Rüttelvorrichtungen stellt aber für die Silowand eine zusätzliche Beanspruchung dar und verursacht meist selbst Geräusche. Derartige Vorrichtungen, die aktiv wirken, sind technisch aufwendig und störanfällig.

Aus DE-A-42 16 853 ist es bekannt, dynamische Auswirkungen des Schüttgutes auf ein Silo bei dessen Entleerung dadurch zu verhindern, daß in dem Silo angeordnete bewegliche Organe graduell geliftet werden, um die Möglichkeiten einer turbulenten Bewegung des zu entleerenden Schüttguts zu vermeiden.

Aus US-A-27 41 464 ist es ferner bekannt, in einem Silo Auslenkbleche vorzusehen, um ein Vermischen des Siloinhalts zu bewirken.

Aus FR-A-1 290 269 ist ein doppelwandiges Silo mit einer Innenwand bekannt, die aus einem glatten Blech oder aus einem Wellblech bebildet ist.

Schließlich ist aus LU-A-58 526 ein Silo mit einer Stabilisierungs- und einer Dosierzone bekannt, ohne daß in dieser Druckschrift auf die Innenseite der Silowand eingegangen wird.

Der Stand der Technik kennt keine Maßnahmen mit Hilfe derer es möglich wäre, auf technisch einfache und zuverlässige Weise, dynamische Effekte, die bei der Entnahme von Schüttgut aus einem Silo auftreten, zu vermindern.

Aufgabe der Erfindung ist die Schaffung eines Verfahrens und einer Vorrichtung, die bei Entnahme von Schüttgut aus einem Silo die dynamischen Bewegungsvorgänge des Schüttgutes und deren Auswirkungen auf die Silowand vermindern und eine Geräuschemission, insbesondere das sog. "Silohupen", verhindert.

Gelöst wird diese Aufgabe durch ein Verfahren mit den Merkmalen des Anspruchs 1 und durch eine Vorrichtung mit den Merkmalen des Anspruchs 6. In den abhängigen Ansprüchen sind vorteilhafte und bevorzugte Weiterbildungen der Erfindung angegeben.

Gemäß der Erfindung wird vorgeschlagen, die Geschwindigkeit des Schüttgutes im Wandbereich durch eine makroskopische Rauhigkeit an der Wand so zu verringern, daß sich eine breite Wandscherzone ausbildet wodurch dynamische Effekte im Schüttgut vermindert und geräuschverursachende Schwingungsanregungen der Silowand unterdrückt werden. Die Erfindung sieht also vor, an der Innenfläche des schaftförmigen Teils des Silos, passiv wirkende Mittel zu verwenden, die die Fließgeschwindigkeit des Schüttgutes im wandnahen Bereich verzögern. Diese erfindungsgemäßen Mittel bilden für die Fließbewegung des Schüttgutes einen erhöhten Strömungswiderstand.

Unter der Wandscherzone ist jene Zone zu verstehen, die sich aufgrund der Wandreibungskraft im Schüttgut ausbildet. In der Wandscherzone wirken auf die einzelnen Teilchen des Schüttgutes Scherdehnungskräfte. Die Fließgeschwindigkeit des Schüttgutes in der Wandscherzone ist geringer als in der Mitte des Behälters.

Die erfindungsgemäße makroskopische Rauhigkeit an der Wand kann beispielsweise durch eine fließtechnisch speziell gestaltete Innenfläche der Silowand selbst erfolgen. Die Erfindung schlägt also vor, die Siloinnenwand "rauh" und nicht "glatt" auszuführen. Unter "rauh" ist im Sinne der Erfindung nicht die mikroskopische Rauhtiefe - die mehr oder weniger jede technische Oberfläche aufweist - zu verstehen, sondern eine, auf das Schüttgut abgestimmte Rauhigkeit der Wand. Die Innenfläche der Silowand weist also Gestaltabweichungen in Form eines Rauheitsprofils auf. Diese Gestaltabweichungen können regelmäßig oder unregelmäßig sein. Von Bedeutung ist, daß diese Gestaltabweichungen der Siloinnenfläche auf das verwendete Schüttgut abgestimmt sind. Dies erfolgt durch die makroskopische Rauhigkeit, also einer Wandrauhigkeit die vom Schüttgut als erhöhter Strömungswiderstand wahrgenommen wird. Wesentlich ist, daß eine Geschwindigkeitsreduktion des Schüttgutes im Wandbereich so erfolgt, daß durch Ausbildung einer Wandscherzone dynamische Effekte im Schüttgut wirkungsvoll vermindert werden. Die makroskopische Rauhigkeit bestimmt also die Wirkung der Siloinnenfläche auf das Fließen des Schüttgutes im wandnahen Bereich.

Je nach Größe und Art des Schüttgutes ist das erfindungsgemäße Mittel unterschiedlich. Bei einer bestimmten Korngröße des Schüttgutes ist das Rauheitsprofil mit bloßem Auge erkennbar. Technische Hilfsmittel, wie zB Mikroskop, sind dann zur Wahrnehmung dieser erfindungsgemäß gestalteten Innenfläche nicht erforderlich.

Der Fachmann weiß, welche Maßnahmen er zu ergreifen hat, damit die Oberfläche der Silowand auf das Silogut fließtechnisch rauh wirkt. Diese Maßnahmen können beispielsweise auch darin bestehen, daß nahe an der Wand Einbauten vorgenommen werden. Der Fachmann kennt verschiedenste Mittel, welche für das Fließen des Schüttgutes einen erhöhten Strömungswiderstand darstellen. Diese Mittel können zB vorspringende Teile sein. Die Wand kann Noppen oder Sicken, oder ein Gitter aufweisen. Die erfindungsgemäßen Mittel können nahe an der Wand angebracht sein oder, wie im folgenden dargelegt, direkt durch die Silowand, beispielsweise durch eine Struktur bzw ein Profil der Innenfläche der Wand, gebildet werden.

Mit Vorteil ist die Silowand an der Innenfläche strukturiert ausgeführt, weist also eine makroskopische Rauhigkeit auf, die, gegenüber einer festgelegten mittleren Linie, Erhebungen und/oder Vertiefungen aufweist. Die so gebildete Profilierung bildet zum Schüttgut hin offene Halbräume. Diese Halbräume sind so gestaltet, daß sie auf die Geschwindigkeit der Teilchen,die sich an der Wand vorbeibewegen verzögernd wirken. Es kommt zur Ausbildung einer breiten Wandscherzone, die auf dynamische Bewegungsvorgänge des Schüttgutes dämpfend wirkt. Dynamische Belastungen der Silowand werden dadurch verringert. Es wird verhindert, daß die Silokonstruktion in Resonanz gerät. Der Halbraum ist erfindungsgemäß so gestaltet, daß der mittlere Korndurchmesser anliegender Teilchen zumindest teilweise in diesen Halbraum paßt. Zur Beschreibung der geometrischen Ausdehnung der meist unregelmäßig geformten Teilchen des Schüttgutes wird der mittlere Komdurchmesser d₅₀ gemäß DIN 18 123 verwendet.

Besonders bevorzugt ist eine Profilierung der Siloinnenfläche, bei der der makroskopische Mittenrauhwert mindestens so groß wie ein fünftel des mittleren Korndurchmessers des Schüttgutes ist. Der makroskopische Mittenrauhwert ist das arithmetische Mittel aller Profilordinaten gebildet über eine Gesamtmeßstrecke der erfindungsgemäß gestalteten Siloinnenfläche. Ganz besonders wirkungsvoll lassen sich dynamische Effekte vermindern, wenn der makroskopische Mittenrauhwert mindestens so groß wie der mittlere Korndurchmesser des Schüttgutes ist.

In einer bevorzugten Weiterbildung der Erfindung weist nur ein Teilbereich der Innenfläche des schaftförmigen Teils eine Profilierung in Form eines strukturierten Bleches auf. Das strukturierte Blech bildet also die makroskopisch rauhe Innenfläche. Hierbei wird ein handelsübliches, strukturiertes Blech, ein sogenanntes Waffelblech oder Noppenblech, bevorzugt. Derartige Bleche weisen eine polyederförmig bzw ballenförmig strukturierte Fläche auf. Es wurde gefunden, daß die erfindungsgemäße Wirkung bereits dann eintritt, wenn nur ein Teil der Innenfläche des Siloschafts mit diesen Blechen, und zwar im Bereich des Übergangs zwischen einem Kernfluß (infolge der Auslaßöffnung) und einem Massenfluß, ausgestaltet wird. Die unerwünschten dynamischen Effekte in einem Silo können dadurch kostengünstig vermindert werden. Das erfindungsgemäße Mittel wirkt passiv, dh der Betrieb der Siloanlage ist weitgehend wartungsfrei und zuverlässig.

Es ist hierbei auch bevorzugt als strukturiertes Blech ein sogenanntes Lochblech, Schuppenblech oder Streckgitter zu verwenden. Strukturierte Bleche sind in verschiedenen Werkstoffen, Größen und Ausführungsformen handelsüblich.

Besonders bevorzugt ist, wenn bei einem Rundsilo der Teilbereich der Innenfläche, der eine makroskopische Rauhigkeit aufweist, ein Abschnitt einer Zylindermantelfläche ist und dieser Abschnitt im unteren Bereich des Siloschaftes liegt. Der Abschnitt liegt über dem Trichter am Übergang zwischen einem Kernfluß und einem Masenfluß. Ganz besonders bevorzugt ist, wenn der Abschnitt zum Trichter oder Bodenplatte einen Abstand aufweist, der kleiner als der Durchmesser des Rundsilos ist. Bei einem Rundsilo aus einer Blechkonstruktion erhält man dadurch eine besonders wirkungsvolle Unterdrückung dynamischer Effekte.

Bestehende Siloanlagen lassen sich auf einfache Weise mit diesen erfindungsgemäßen Mitteln nachrüsten. Bei einem Silo, das aus einer Metallkonstruktion besteht, läßt sich ein Waffelblech oder ein Noppenblech technisch einfach durch eine Niet- oder Schweißverbindung anbringen. Durch diese Nachrüstung kann mit geringem Aufwand eine Geräuschentwicklung beim Entleeren des Silos verhindert werden.

Das erfindungsgemäße Mittel kann auch ein Gitter sein, das an der Wand oder in der Nähe der Wand angebracht ist. Das Gitter kann beispielsweise aus Stahl oder aus Kunststoff gefertigt sein.

Bei einem Stahlbetonsilo kann eine makroskopisch rauhe Innenfläche des Zellenschaftes leicht bei der Herstellung durch eine konvexe bzw konkave Profilierung der Innenfläche erzielt werden. In Grenzen ist dies bei einem Stahlbetonsilo auch nachträglich möglich, beispielsweise indem durch mechanische Nacharbeitung kraterförmige Vertiefungen an der Innenfläche angebracht werden. Die makroskopische Rauhigkeit der Wand kann bei Stahlbetonsilos aber auch durch den oben dargestellten Einbau strukturierter Bleche oder Gitter erzielt werden.

Für die erfindungsgemäße Wirkung der makroskopisch rauhen Innenfläche ist es unerheblich, ob der Siloschaft einen Kreisquerschnitt oder einen Polygonquerschnitt aufweist. Ferner ist es für die Erfindung unerheblich, ob das trichterförmige Teil, wie eingangs erwähnt, eine oder mehrere Auslaßöffnungen aufweist Das trichterförmige Teil kann einen steilen oder flachen Neigungswinkel aufweisen oder als flache Bodenplatte ausgeführt sein.

Die Erfindung wird im folgenden anhand von Ausführungsbeispielen in Verbindung mit Zeichnungen beschrieben. Darin zeigen:
- Figur 1: ein Silo in schematischer geschnittener Darstellung, ohne Haltekonstruktion;
- Figur 2: eine erfindungsgemäß makroskopisch rauh gestaltete Innenfläche eines Silos in einer Ausschnittsdarstellung;
- Figur 3: eine Ausführungsform einer erfindungsgemäß gestalteten Innenfläche eines Stahlbetonsilos;
- Figur 4: eine erfindungsgemäß makroskopisch rauh gestaltete Innenfläche einer Silowand mit sickenförmiger Profilierung;
- Figur 5: eine erfindungsgemäß makroskopisch rauh gestaltete Silowand mit einer rippenförmigen Profilierung;
- Figur 6: ein Waffelblech mit polyederförmigen Erhebungen;
- Figur 7: ein Noppenblech mit ballenförmigen Erhebungen;
- Figur 8: ein Blech mit lochförmigen Ausnehmungen;
- Figur 9: ein Blech mit Quadratlochung;
- Figur 10: ein an der Silowand befestigtes Gitter;
- Figur 11: eine bevorzugte Weiterbildung der Erfindung, bei der nur ein Teilbereich der Innenfläche des Zellenschafts eine makroskopische Rauhigkeit aufweist;
- Figur 12: ein strukturiertes Blech in Form eines Streckgitters;
- Figur 13: ein strukturiertes Blech mit Langlöchern;
- Figur 14: ein strukturiertes Blech in Form eines Schuppenbleches;
- Figur 15: eine Grundbauform eines Silos mit einem konischen Trichter;
- Figur 16: ein Grundbauform eines Silos mit ebener Bodenplatte;
- Figur 17: ein erfindungsgemäßer Rundsilo;
- Figur 18: ein Schnitt gemäß der Linie XVIII - XVIII in Figur 17.

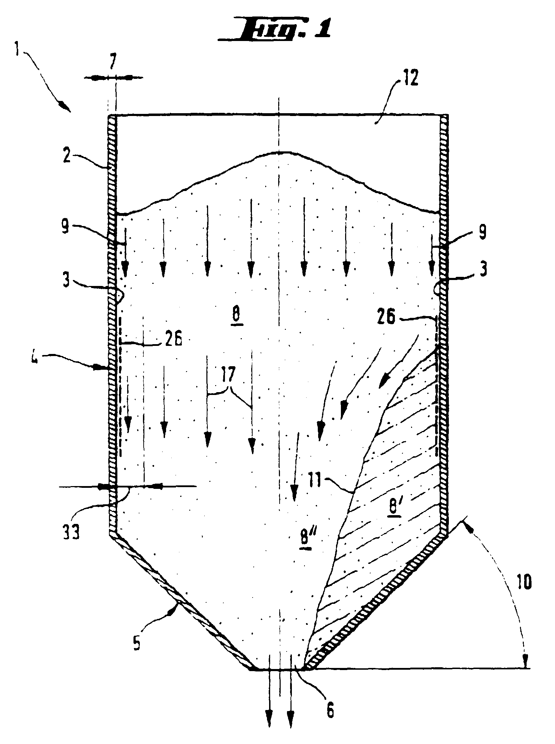

Fig. 1 zeigt ein Silo 1 in schematischer geschnittener Darstellung. Die Konstruktion des Silos gliedert sich in ein schaftförmiges Teils 4 und in ein trichterförmiges Teil 5. Das trichterförmige Teil 5 ist gegenüber der Horizontalen um den Winkel 10 geneigt. Der Winkel 10 kann im Intervall zwischen kleiner 90 Grad und 0 Grad liegen. Bei der Neigung 0 ist das trichterförmige Teil eine ebene Bodenplatte. Die Wand 2 des schaftförmigen Teils 4 setzt sich im trichterförmigen Teil 5 fort. Die Wand 2 des Silos weist eine Wanddicke 7 und eine Innenfläche 3 auf. Die Haltekonstruktion des Großbehälters ist in Fig. 1 nicht dargestellt. Das Silo hat eine Öffnung 12 zum Füllen und eine Öffnung 6 zum Entleeren. Die Öffnung 6 ist stets keiner als die Querschnittsfläche des schaftförmigen Teils des Silos. Die Speicherung des Silogutes erfolgt in dem schaftförmigen Teil, auch Zellenschaft genannt. Die Bewegungsrichtung des Schüttgutes 8 während des Entleerens ist durch Pfeile gekennzeichnet. Im Kern des Behälters sind dies die Pfeile 17, in der Nähe der Wand 2 die Pfeile 9. Bei Kernfluß ist ein Teil des Schüttgutes 8, in Fig.1 als Schüttgut 8' gekennzeichnet, in Ruhe. Die Grenzlinie 11 kennzeichnet den Übergang zwischen ruhendem Schüttgut 8' und sich bewegendem Schüttgut 8". Bei Massenfluß bewegt sich hingegen das gesamte Schüttgut 8. Es sind in Fig. 1 beide Fließzustände in einem Bild dargestellt. Die erfindungsgemäßen Mittel 26, die die Geschwindigkeit 9 des Schüttgutes in der Wandnähe verzögern, sind in Fig. 1 strichliert angedeutet. Für das vorbeiströmenden Schüttgut bilden die Mittel 26 - verglichen mit einer herkömmlichen Siloinnenfläche - einen erhöhten Strömungswiderstand. Durch die Mittel 26 kommt es dazu, daß sich eine breite Wandscherzone 33 im Schüttgut ausbildet. Diese Wandscherzone 33 dämpft dynamische Effekte des Schüttgutes die während des Entleerens im Behälter auftreten. Damit werden die auf die Wand 2 des Silos wirkenden Schwingungsanregungen gedämpft. Das sogenannte "Silohupen" wird verhindert.

Fig. 2 zeigt eine erfindungsgemäß makroskopisch rauh gestaltete Innenfläche eines Silos in einer Ausschnittsdarstellung. Ausgehend von einer ideal glatten Wand, dargestellt als Mittenlinie 15, zeigt die Oberfläche eine Profilierung 19 mit Erhebungen 13 und Vertiefungen 14. In Fig. 2 ist eine unregelmäßige Profilierung dargestellt. Benachbarte Erhebungen und Vertiefungen bilden zum Schüttgut hin offene Halbräume 18. Die Profilierung ist so ausgeführt, daß diese Halbräume einzelne Teilchen des Schüttgutes zumindest teilweise aufnehmen können. Dies ist beispielhaft für ein Teilchen 16" dargestellt. Das Schüttgut besteht aber meist aus Teilchen mit unterschiedlichen geometrischen Abmessungen. Es kann also auch sein, daß ein bestimmter Massenanteil der Teilchen kleiner als der Halbraum 18 ist , was in Fig. 2 durch das Teilchen 16' dargestellt ist. Wesentlich ist, daß die Innenfläche der Wand 2 makroskopisch rauh wirkt, also - aus der Sicht des vorbeiströmenden Schüttgutes - einen, verglichen mit einer herkömmlich ausgeführten Innenfläche einer Silowand, erhöhten Strömungswiderstand bildet.

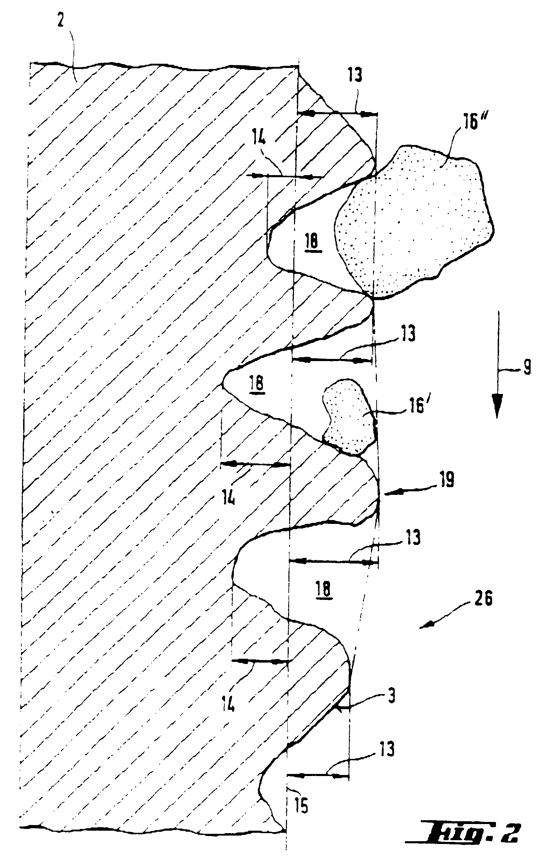

In Fig. 3 ist eine Ausführungsform einer erfindungsgemäß gestalteten Innenfläche eines Stahlbetonsilos in schematischer, geschnittener Darstellung gezeigt. An der Innenfläche der Silowand 2 sind unregelmäßige Vertiefungen angebracht, die zum Silogut hin offene Halbräume 18 bilden. Diese Vertiefungen, die entweder direkt bei der Herstellung oder auch nachträglich an der Wand eines Stahlbetonsilos angebracht werden, verzögern die Fließgeschwindigkeit des Silogutes im wandnahen Bereich. Es bildet sich aufgrund der kraterfömigen Innenfläche des Großbehälters eine breite Wandscherzone aus. Bei der Entleerung des Großbehälters auftretende dynamische Effekte werden durch die Wandscherzone gedämpft. Dynamische Belastungen werden verringert.

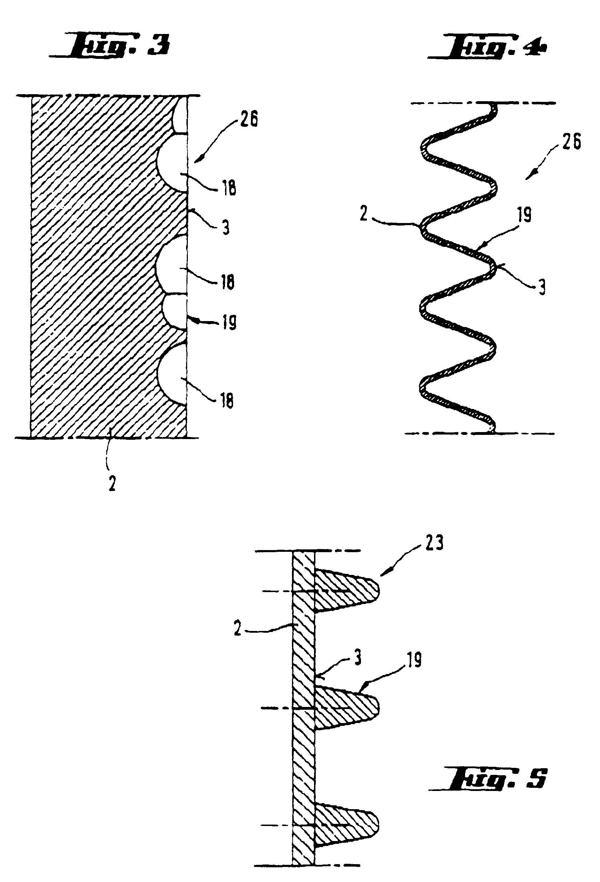

Eine makroskopische Wandrauhigkeit kann aber auch durch eine Profilierung 19 mit regelmäßigen Erhebungen und/oder Vertiefungen erzielt werden. In Fig. 4 bzw in Fig. 5 ist eine sickenförmige bzw rippenförmige Profilierung dargestellt. Die sickenförmige Profilierung in Fig. 4 kann beispielsweise durch eine Wand 2 aus Wellblech gebildet werden, deren geometrische Form speziell auf das Schüttgut abgestimmt ist. Eine rippenförmige Profilierung 19 (Fig. 5) kann beispielsweise an einer glatten Wand 2 auch nachträglich angebracht werden. Die Befestigung der rippenförmigen Profilierung kann beispielsweise durch Schraub-, Niet- oder Schweißverbindung erfolgen.

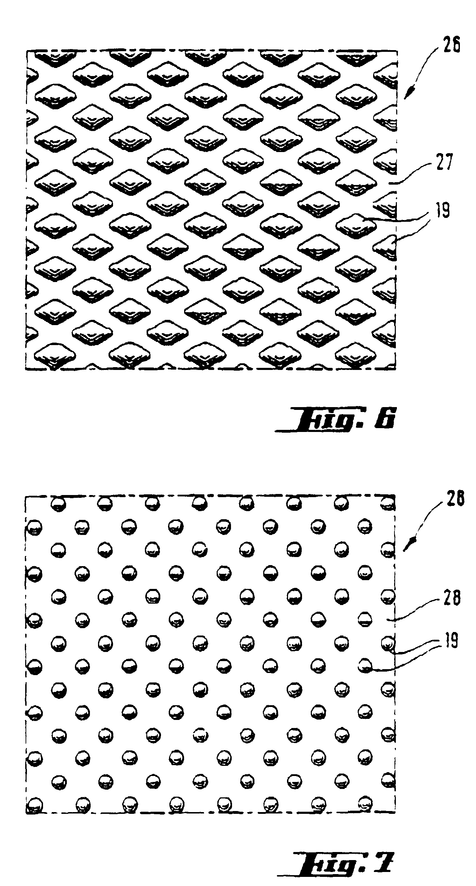

In einer bevorzugten Ausführung der Erfindung wird die makroskopisch rauhe Innenfläche der Silowand durch ein Waffelblech 27 (Fig. 6) oder durch ein Noppenblech 28 (Fig. 7) gebildet. Die polyederförmigen bzw ballenförmigen Erhebungen des Waffel- bzw Noppenbleches sind nicht scharfkantig. Dadurch erreicht man, daß der Wandreibungsbeiwert des Silos erhöht wird, ohne daß es dabei zu Abrieb oder sonstigen Beschädigungen des Schüttgutes kommt. Wenn der Zellenschaft eine Metallkonstruktion ist, können diese strukturierten Bleche vorteilhaft mittels Niet- oder Schweißverbindung befestigt werden. Es kann die Innenfläche des Zellenschaftes ganz oder teilweise mit derartigen Profilblechen ausgeführt sein. Welche Ausführungsform zu wählen ist, hängt von der Silokonstruktion, dem Schüttgut und den auftretenden dynamische Effekten beim Entleeren ab. Die erfindungsgemäßen Mittel können bereits bei der Konstruktion und Herstellung der Siloanlage vorgesehen sein. Bestehenden Siloanlagen können auf einfache Weise mit diesen Blechen nachgerüstet werden.

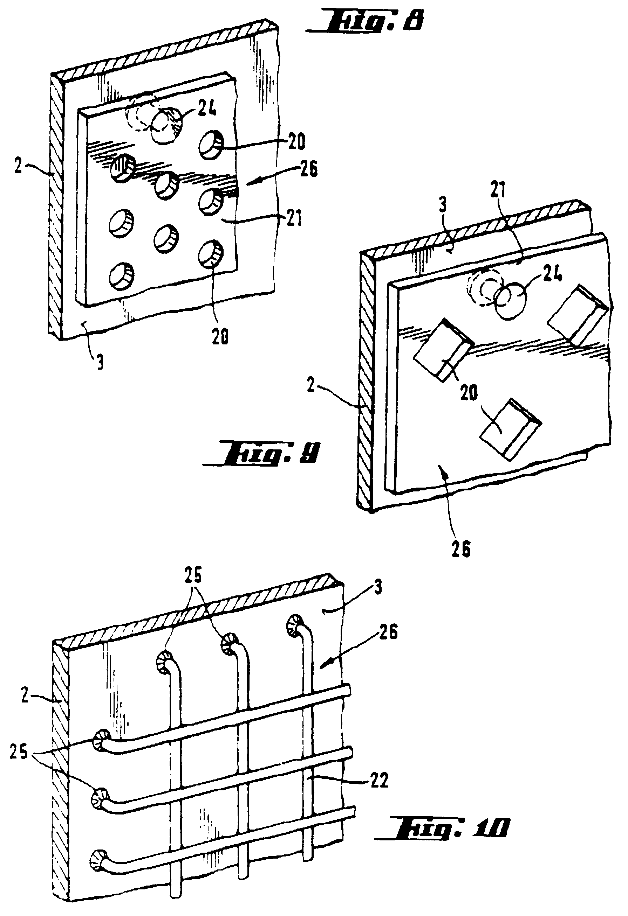

In einer weiteren bevorzugten Ausführungsform ist das erfindungsgemäße Mittel 26 ein Blech 21 mit lochförmigen Ausnehmungen 20. Die makroskopische Rauhigkeit wird durch die Dicke des Blechs und durch die Ausnehmungen 20 gebildet. Es sind unterschiedliche geometrische Formen der Ausnehmungen 20 möglich. In Fig. 8 ist ein Blech mit Rundlochung, in Fig. 9 ein Blech mit Quadratlochung in diagonal versetzten Reihen dargestellt. Es ist auch bevorzugt, wenn die Mittel 26 durch eine Gitter 22 gebildet werden (Fig. 10). Das Gitter 22 kann beispielsweise ein Stahlgitter sein. Das Blech 21 bzw das Gitter 22 kann mittels einer Nietverbindung 24 bzw einer Schweißverbindung 25 an der Wand 2 des Siloschaftes befestigt sein.

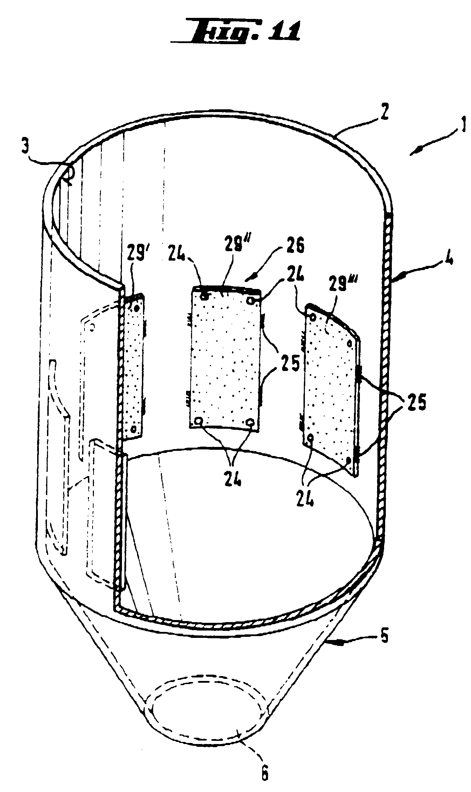

In Fig. 11 ist eine bevorzugte Weiterbildung eines Silos dargestellt, bei dem nur Teilbereiche 29', 29", 29"' der Innenfläche 3 des Zellenschafts 4 eine makroskopische Rauhigkeit in Form von strukturierten Blechen aufweisen. Diese Bleche können mittels Nietverbindungen 24 und/oder Schweißverbindungen 25 an der Innenfläche 3 der Wand 2 befestigt.

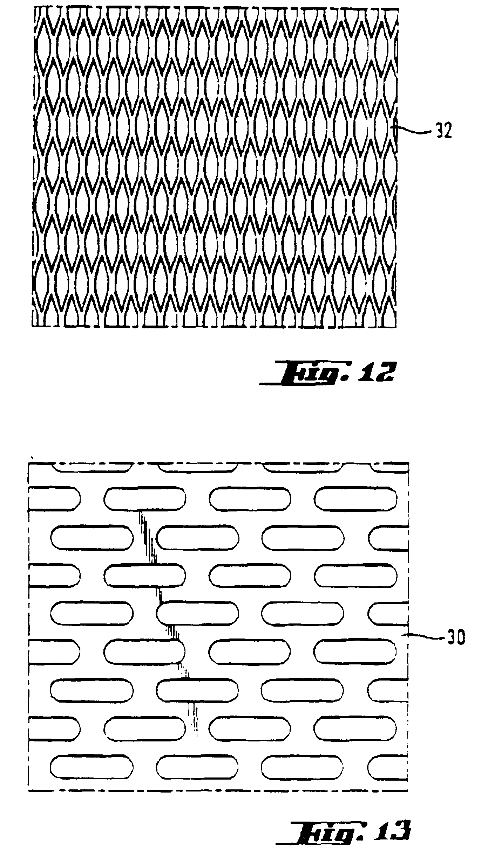

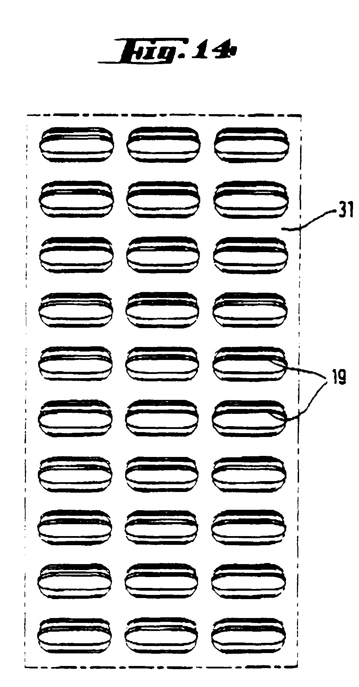

In Fig. 12 ist ein handelsübliches Streckgitter 32 dargestellt. Bleche mit lochförmigen Ausnehmungen, beispielsweise als Langloch 30 in Fig. 13 gezeigt, sind in verschiedenen Materialien, wie beispielsweise Aluminium und Stahl, handelsüblich. Ein sogenanntes Schuppenblech 31 ist in Fig. 14 dargestellt.

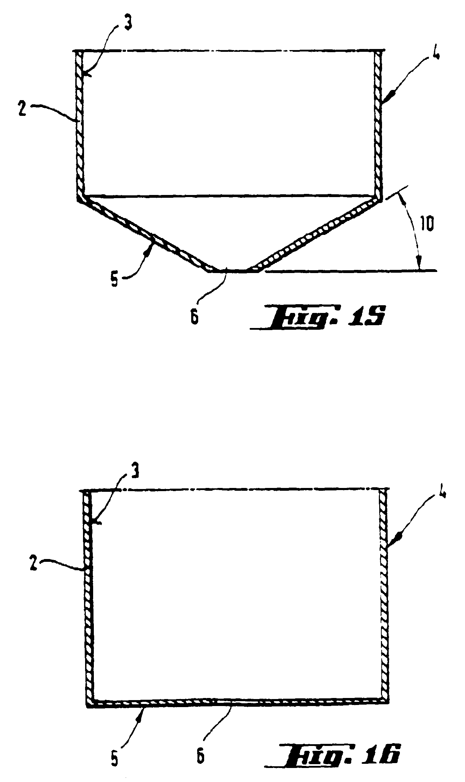

Fig. 15 und Fig. 16 zeigen bekannte Grundbauformen von Silos. In Fig. 15 ist das trichterförmige Teil 5 gegenüber der Horizontalen geneigt, die Innenfläche des Trichters weist also einen Neigungswinkel auf. In Fig. 16 besteht hingegen der Trichter aus einem waagerechten Bodenteil.

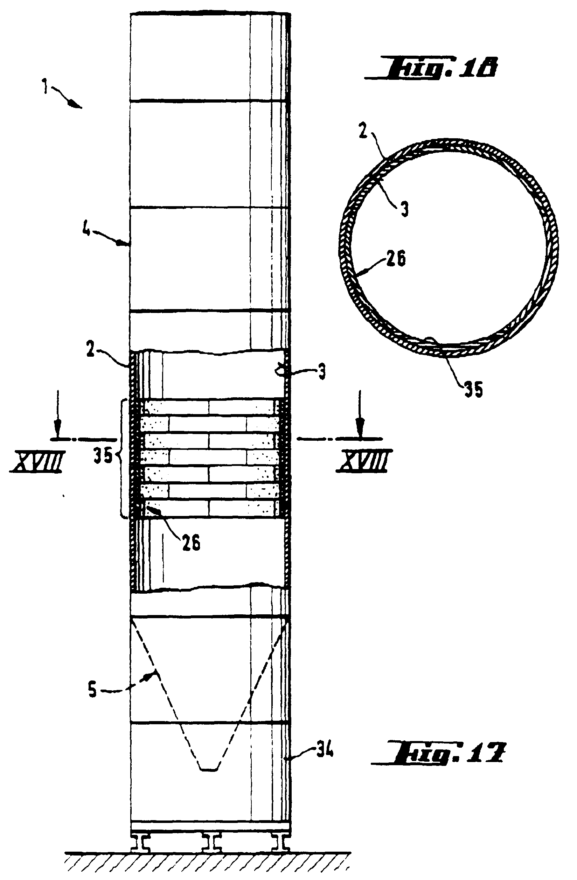

In Fig. 17 ist als erfindungsgemäßes Beispiel ein Rundsilo dargestellt. Das Silo 1 ist für Massenfluß konstruiert. Das schaftförmige Teil 4 ist kreisförmig mit einem Durchmesser von 3,5 m. Die Silohöhe ist 20 m. Der Trichter 5 ist in Fig. 17 strichliert gezeichnet. Die Form des Trichters 5 ist konisch. Das Silo 1 wird von einer Haltekonstruktion 34 gestützt. Die Wand des Silos wird aus zylinderförmigen Segmenten, die aus Aluminiumblech bestehen, gebildet. Die Dicke der Aluminiumbleche, bildet die Wanddicke 7 des Silos und variiert zwischen 3,5 mm am oberen und 7,5 mm am unteren Ende des Siloschaftes. Die Blechdicke im trichterförmigen Teil beträgt 4 mm. Der Trichter ist 3 m lang und hat einen Neigungswinkel von 60 Grad. Bei Entnahme von Silogut liegt der Massenstrom zwischen 10 und 12 Tonnen pro Stunde.

Bei der Entleerung dieses Silos, das mit Polymergranulat befüllt war, traten in Abständen von 7 bis 15 Sekunden, impulsförmige, sehr laute Entleerungsgeräusche auf. Dieses "Silohupen" trat manchmal und nur bei bestimmten Polymergranulaten auf. Es wurden Lautstärken bis zu 100 dBA gemessen. Die Wandscherzone betrug etwa 5 bis 10 cm.

Dieses Silo wurde nachgerüstet, indem gemäß der Erfindung die Innenfläche makroskopische rauh gestaltet wurde. Durch diese Maßnahme verbreiterte sich die Wandscherzone im Behälter auf etwa 15 bis 20 cm. Dynamische Effekte des Schüttgutes im Behälter konnten derart stark verringert werden, daß keine Entleerungsgeräusche hörbar wurden. Die makroskopisch rauhe Innenfläche wurde durch den Einbau handelsüblicher Waffelbleche erzielt. Diese strukturierten Blech wurden nur in einem in Fig. 17 gekennzeichneten Teilbereich der Innenfläche angebracht. Dieser Teilbereich ist im vorliegenden Beispiel ein Abschnitt 35 einer Zylindermantelfläche und liegt im Behälter in einer Höhe von 7,5 m bis 11 m und bedeckt den gesamten Umfanges des Rundsilos (Fig. 17). Die Bleche wurden in sieben horizontalen Reihen (7 x 0,5 m) und in fünf vertikalen Spalten (5 x 2,0 m) angebracht. Die strukturierte Fläche des Waffelblechs weist polyederförmige Erhebungen mit einer Höhe von 2 mm auf. Die Waffelbleche wurden im Großbehälter mittels Nietverbindung an der Wand befestigt. Es wurden handelsübliche Blechtafeln aus Aluminium verwendet.

Ein Schnitt durch das Silo 1 gemäß der Linie XVIII-XVIII ist in Fig. 18 gezeigt. Die Innenfläche 3 der Wand 2 weist die erfindungsgemäßen Mittel 26 auf. Im vorliegenden erfindungsgemäßen Beispiel sind, wie oben dargestellt, die Mittel 26 handelsübliches Waffelblech. Sie erstrecken sich entlang des bevorzugten Abschnittes 35 des schaftförmigen Teils 4 des Rundsilos. Besonders bevorzugt ist, wenn dieser Abschnitt 35 am Übergang zwischen Kern und Massenfluß liegt.

Im vorliegenden Beispiel konnte durch das erfindungsgemäße Verfahren das Silo so entleert werden, daß keine Geräusche bei der Entnahme von Schüttgut höhrbar wurden. Die Siloanlage arbeitet störungsfrei. Eine Messung der Beschleunigung an der Zylinderwand zeigt, daß die Schwingungsanregung der Wand durch die Erfindung deutlich verringert werden konnte. Dynamische Belastungen, die während der Entnahme von Schüttgut auf die Silokonstruktion wirken, wurden durch die Erfindung weitgehend verringert.

## Patentansprüche

1. Verfahren zur Verminderung von geräuschverursachenden Schwingungen eines Behälters, insbesondere eines Silos, bei der Entnahme von Schüttgut aus dem Behälter, der
- mit einem schaftförmigen und einem trichterförmigen Teil (4,5) versehen ist, wobei der schaftförmige Teil (4) des Behälters eine im wesentlichen lotrechte Wand (2) mit einer Öffnung (12) zum Füllen aufweist,
bei dem bei Entnahme von Schüttgut aus dem Behälter
- das Schüttgut durch eine Auslaßöffnung (6) im trichterförmigen Teil (5) austritt und an der Wand (2) des schaftförmigen Teils sich mit einer Geschwindigkeit (9) vorbeibewegt,
- wobei die Geschwindigkeit (9) des Schüttgutes nahe an der Wand (2) durch eine makroskopische Rauhigkeit zumindest eines Teilbereichs der Innenfläche (3) der Wand (2) so verringert wird, daß sich eine breite Wandscherzone (33) ausbildet, wodurch geräuschverursachende Schwingungsanregungen der Wand (2) vermindert werden.

2. Verfahren nach Anspruch 1, dadurch gekennzeichnet, daß die makroskopische Rauhigkeit der Innenfläche (3) der Wand (2) dadurch gebildet wird, daß
- die Innenfläche (3) eine Profilierung (19) aufweist,
- die Profilierung (19) Erhebungen (13) und/oder Vertiefungen (14) aufweist,
- jeweils Vertiefungen (14) bzw. benachbarte Erhebungen (13) und/oder Vertiefungen (14) zum Schüttgut hin einen offenen Halbraum (18) bilden,
- das Schüttgut (8) aus Teilchen (16) besteht, die einen mittleren Korndurchmesser aufweisen, und
- der Halbraum (18) so gewählt ist, daß der mittlere Korndurchmesser der Teilchen (16) des Schüttgutes (8) zumindest teilweise in den Halbraum (18) paßt.

3. Verfahren nach Anspruch 2, dadurch gekennzeichnet, daß die Profilierung (19) einen makroskopischen Mittenrauhwert aufweist, der so groß wie ein fünftel des mittleren Korndurchmessers, besonders bevorzugt so groß wie der mittlere Korndurchmesser der Teilchen (16) des Schüttgutes (8) ist.

4. Verfahren nach Anspruch 2, dadurch gekennzeichnet, daß die Innenfläche (3) einen Teilbereich (29) aufweist, der Teilbereich (29) eine Profilierung (19) aufweist und diese Profilierung (19) durch ein Waffelblech (27) oder durch ein Noppenblech (28) ausgebildet ist.

5. Verfahren nach Anspruch 1, dadurch gekennzeichnet, daß die makroskopische Rauhigkeit an der Wand durch ein Blech (21) mit lochförmigen Ausnehmungen (20) oder durch ein Gitter (22) gebildet wird und daß das Blech (21) oder das Gitter (22) mittels einer Nietverbindung oder einer Schweißverbindung an der Wand (2) befestigt ist.

6. Vorrichtung zur Verhinderung von geräuschverursachenden Schwingungen eines Behälters, insbesondere eines Silos, bei der Entnahme von Schüttgut aus dem Behälter, mit
- einem schaftförmigen und einem trichterförmigen Teil (4,5), wobei
- der schaftförmige Teil (4) des Behälters mindestens eine im wesentlichen lotrechte Wand (2) mit einer Innenfläche (3) und einer Öffnung (12) zum Füllen aufweist,
- der trichterförmige Teil (5) eine Auslaßöffnung (6) zur Entnahme von Schüttgut aufweist und
- das Schüttgut bei Entnahme aus dem Behälter aus der Auslaßöffnung austritt und sich an der Wand (2) des schaftförmigen Teils mit einer Geschwindigkeit (9) vorbeibewegt,
**dadurch gekennzeichnet**, daß
- an der Innenfläche (3)der Wand (2) des schaftförmigen Teils (4) zumindest in einem Teilbereich Mittel (26) zur Schaffung einer makroskopischen Rauhigkeit und damit zur Schaffung einer breiten Wandscherzone (33) angeordnet sind, die die Geschwindigkeit (9) des Schüttgutes nahe an der Wand (2) so verringert, daß eine geräuschverursachende Schwingungsanregung der Wand (2) bei der Entnahme des Schüttgutes vermindert wird.

7. Vorrichtung nach Anspruch 6, dadurch gekennzeichnet, daß die makroskopisch rauhe Innenfläche (3) durch eine Profilierung (19) dadurch gebildet wird, daß
- die Profilierung (19) Erhebungen (13) und/oder Vertiefungen (14) aufweist,
- jeweils Vertiefungen (14) bzw. benachbarte Erhebungen (13) und/oder Vertiefungen (14) zum Schüttgut hin einen offenen Halbraum bilden,
- der Halbraum (18) so gewählt ist, daß der mittlere Korndurchmesser der Teilchen (16) des Schüttgutes (8) zumindest teilweise in den Halbraum (18) paßt.

8. Vorrichtung nach Anspruch 6, dadurch gekennzeichnet, daß
- die Wand (2) des schaftförmigen Teils (4) eine Blechwand ist,
- die Blechwand eine Innenfläche (3) mit einem Teilbereich (29) aufweist,
- der Teilbereich (29) eine Profilierung (19) aufweist, die durch ein Waffelblech (27) oder durch ein Noppenblech (28) gebildet sind, welches mittels einer Nietverbindung (24) oder einer Schweißverbindung (25) an der Blechwand befestigt ist.

9. Vorrichtung nach Anspruch 7 oder 8, dadurch gekennzeichnet, daß die Profilierung (19) einen makroskopischen Mittenrauhwert aufweist, der so groß wie ein fünftel des mittleren Korndurchmessers, besonders bevorzugt so groß wie der mittlere Korndurchmesser der Teilchen (16) des Schüttgutes (8) ist.

10. Vorrichtung nach Anspruch 6, dadurch gekennzeichnet, daß die makroskopsich rauhe Innenfläche (3) der Wand (2) durch eine Profilierung (19) eines Waffelbleches (27) oder eines Noppenbleches (28) gebildet wird.

11. Vorrichtung nach Anspruch 6, dadurch gekennzeichnet, daß die makroskopisch rauhe Innenfläche (3) der Wand (2) durch eine Profilierung (19) eines Lochbleches (30) oder eines Schuppenbleches (31) oder eines Streckgitters (32) gebildet wird, welches in einem Teilbereich (29) des schaftförmigen Teils (4) mittels einer Nietverbindung (24) oder einer Schweißverbindung (25) befestigt ist.

12. Vorrichtung nach Anspruch 8 oder 9, dadurch gekennzeichnet, daß die Innenfläche (3) der Wand (2) eine Mantelfläche eines Kreiszylinders bildet und der Teilbereich (29) ein Abschnitt (35) dieser Mantelfläche ist.

13. Vorrichtung nach Anspruch 7 und 12, dadurch gekennzeichnet, daß der Abschnitt (35) zum trichterförmigen Teil (5) einen Abstand aufweist, der kleiner als der Durchmesser des Kreiszylinders ist.

## Claims

1. A method for the reduction of noise-generating oscillations of a container, particularly of a silo, during the discharge of bulk material from the container which is provided with a shaft-shaped and a funnel-shaped portion (4,5), with the shaft-shaped portion (4) of the container comprising a substantially vertical wall (2) having an opening (12) formed therein for filling, in which method, during discharge of bulk material from the container
the bulk material is discharged through a discharge opening (6) in the funnel-shaped portion (5) and moves along the wall (2) of the shaft-shaped portion with a speed (9),
the speed (9) of the bulk material near the wall (2) is decreased by a macroscopic roughness of at least a partial area of the inner surface (3) of the wall (2) to thus generate a wide wall shear zone (33) whereby noise-generating excited vibrations of the wall (2) are suppressed.

2. The method according to claim 1, characterized in that the macroscopic roughness (3) of the inner surface of the wall (2) is formed in that
the inner surface (3) comprises a profile (19),
the profile (19) comprises raised portions (13) and/or deepened portions (14),
the respective deepened portions (14) or the respective adjacent raised portions (13) and/or deepened portions (14) form half-spaces (18) which are open towards the bulk material,
the bulk material (8) comprises particles (16) having an average granule diameter,
the half-space (18) is selected such that the average granule diameter of the particles (16) of the bulk material (8) fits at least partially into the half-space (18).

3. The method according to claim 2, characterized in that the profile (19) has an average macroscopic roughness value as large as a fifth of the average granule diameter and preferably as large as the average granule diameter of the particles (16) of the bulk material (8).

4. The method according to claim 2, characterized in that the inner surface (3) comprises a partial region (29), that the partial region (29) comprises a profile (19) and that this profile (19) is formed by a waffle sheet metal (27) or by a burled sheet metal (28).

5. The method according to claim 1, characterized in that the macroscopic roughness on the wall is formed by a sheet metal (21) with hole-shaped cutouts (20) or by a reticular structure (22), and that the sheet metal (21) or the reticular structure (22) is mounted to the wall (2) by a rivet connection or welding connection.

6. A device for the prevention of noise-generating oscillations of a container, particularly of a silo, during the discharge of bulk material from the container, comprising
a shaft-shaped and a funnel-shaped portion (4, 5),
the shaft-shaped portion (4) of the container comprising at least one substantially vertical wall (2) with an inner surface (3) and an opening (12) for filling,
the funnel-shaped portion (5) having a discharge opening (6) formed therein for removal of bulk material, and
the bulk material, while removed from the container, is discharged through the discharge opening and moves along the wall (2) of the shaft-shaped portion with a speed (9),
**characterized in** that
the inner surface (3) of the wall (2) of the shaft-shaped portion (4) at least in a partial area comprises means (26) arranged to provide a macroscopic roughness to thus generate a wide wall shear zone (33) decreasing the speed (9) of the bulk material near the wall (2) in such a manner that a noise-generating excited vibration of the wall (2) during discharge of bulk material are reduced.

7. The device according to claim 6, characterized in that the macroscopically rough inner surface (3) is formed by a profile (19) in that
the profile (19) comprises raised portions (13) and/or deepened portions (14),
the respective deepened portions (14) or the respective adjacent raised portions (13) and/or deepened portions (14) form half-spaces which are open towards the bulk material,
the half-space (18) is selected such that the average granule diameter of the particles (16) of the bulk material (8) fits at least partially into the half-space (18).

8. The device according to claim 6, characterized in that
the wall (2) of the shaft-shaped portion (4) is a sheet metal wall,
the sheet metal wall has an inner surface (3) comprising a partial region (29),
the partial region (29) comprises a profile (19) formed by a waffle sheet metal (27) or a burled sheet metal (28) mounted to the sheet metal wall by a rivet connection (24) or a welding connection (25).

9. The device according to claim 7 or 8, characterized in that the profile (19) has an average macroscopic roughness value as large as a fifth of the average granule diameter and preferably as large as the average granule diameter of the particles (16) of the bulk material (8).

10. The device according to claim 6, characterized in that the macroscopically rough inner surface (3) of the wall (2) is formed by a profile (19) of a waffle sheet metal (27) or a burled sheet metal (28).

11. The device according to claim 6, characterized in that the macroscopically rough inner surface (3) of the wall (2) is formed by a profile (19) of a perforated metal sheet (30) or a scaled sheet metal (31) or a stretched lattice (32) which is mounted in a partial region (29) of the shaft-shaped portion (4) by a rivet connection (24) or a welding connection (25).

12. The device according to claim 8 or 9, characterized in that the inner surface (3) of the wall (2) forms the surface of a circular cylinder and that the partial region (29) is a portion (35) of this surface.

13. The device according to claim 7 and 12, characterized in that the portion (35) is arranged at a distance to the funnel-shaped portion (5) which is smaller than the diameter of the circular cylinder.

## Revendications

1. Procédé de réduction des vibrations, provoquant du bruit, d'un récipient, en particulier d'un silo, lors de la vidange du matériau en vrac hors du récipient, qui
- comporte une partie en forme de fût et une partie en forme d'entonnoir (4, 5), la partie en forme de fût (4) du récipient présentant une paroi essentiellement verticale (2) avec une ouverture (12) pour le remplissage,
dans le cas duquel, lors de la vidange du matériau en vrac hors du récipient
- le matériau en vrac sort par une ouverture de sortie (16) prévue dans la partie en forme d'entonnoir (5) et passe près de la paroi (2) de la partie en forme de fût à une certaine vitesse (9),
- dans le cas duquel on réduit la vitesse (9) du matériau en vrac près de la paroi (2) au moyen d'une rugosité macroscopique d'au moins une zone partielle de la surface intérieure (3) de la paroi (2) de façon qu'il se forme une large zone (33) de cisaillement contre la paroi, ce par quoi on réduit les excitations en vibration de la paroi (2) qui provoquent le bruit.

2. Procédé selon la revendication 1, caractérisé par le fait que la rugosité macroscopique de la surface intérieure (3) de la paroi (2) se forme par le moyen que:
- la surface intérieure (3) présente un profilage (19),
- le profilage (19) présente des éminences (13) et/ou des évidements (14), chacun des évidements (14) ou des éminences (13) et/ou des évidements (14) voisins forment un demi-espace (18) ouvert en direction du matériau en vrac,
- le matériau en vrac (8) est constitué de parcelles (16) qui présentent un diamètre moyen de grain, et
- le demi-espace (18) est choisi de façon que le diamètre moyen de grain des parcelles (16) du matériau en vrac (8) leur permette de pénétrer au moins partiellement dans le demi-espace (18).

3. Procédé selon la revendication 2, caractérisé par le fait que le profilage (19) présente une rugosité macroscopique moyenne, de dimension aussi grande qu'un cinquième du diamètre moyen de grain, de préférence en particulier de dimension aussi grande que le diamètre moyen de grain des parcelles (16) du matériau en vrac (8).

4. Procédé selon la revendication 2, caractérisé par le fait que la surface intérieure (3) présente une zone partielle (29), que la zone partielle (29) présente un profilage (19) et que ce profilage (19) est formé par un tôle gaufrée (27) ou par une tôle à bossages (28).

5. Procédé selon la revendication 1, caractérisé par le fait que la rugosité macroscopique sur la paroi est formée par une tôle (21) présentant des évidements en forme de trou (20) ou par un grillage (22) et que la tôle (21) ou le grillage (22) est fixé sur la paroi (2) au moyen d'une liaison par rivets ou d'une liaison par soudage.

6. Dispositif pour réduire des vibrations, provoquant du bruit, d'un récipient, en particulier d'un silo, lors de la vidange du matériau en vrac hors du récipient, comportant:
- une partie en forme de fût et une partie en forme d'entonnoir (4, 5), dans lequel
- la partie en forme de fût (4) du récipient présente au moins une paroi essentiellement verticale (2) avec une surface intérieure (3) et une ouverture (12) pour le remplissage,
- la partie en forme d'entonnoir (5) présente une ouverture de sortie (6) pour la vidange du matériau en vrac; et
- lors de la vidange hors du récipient, le matériau en vrac sort par l'ouverture de sortie et passe près de la paroi (2) de la partie formant fût avec une certaine vitesse (9),
caractérisé par le fait,
- que sur la surface intérieure (3) de la paroi (2) de la partie en forme de fût (4) sont disposés au moins dans une zone partielle, des moyens (26) pour créer une rugosité macroscopique et donc pour créer une large zone (33) de cisaillement contre la paroi qui réduit la vitesse (9) du matériau en vrac près de la paroi (2) de façon qu'une excitation en vibration, provoquant du bruit, de la paroi (2) est réduite lors de la vidange du matériau en vrac.

7. Dispositif selon la revendication 6, caractérisé par le fait que la surface intérieure (3) à rugosité macroscopique est formée par un profilage (19) par le moyen que
- le profilage (19) présente des éminences (13) et/ou des évidements (14),
- chacun des évidements (14) ou des éminences (13) et/ou des évidements (14) voisins forment un demi-espace ouvert en direction du matériau en vrac,
- le demi-espace (18) est choisi de façon que le diamètre moyen de grain des parcelles (16) du matériau en vrac (8) leur permette de pénétrer au moins partiellement dans le demi-espace (18).

8. Dispositif selon la revendication 6, caractérisé par le fait que
- la paroi (2) de la partie en forme de fût (4) est une paroi en tôle
- la paroi en tôle présente une surface intérieure (3) avec une zone partielle (29),
- la zone partielle (29) présente un profilage (19) qui est formé par une tôle gaufrée (27) ou par une tôle à bossages (28) qui est fixée à la paroi en tôle au moyen d'une liaison par rivets (24) ou d'une liaison par soudage (25).

9. Dispositif selon la revendication 7 ou 8, caractérisé par le fait que le profilage (19) présente une rugosité macroscopique moyenne, de dimension aussi grande qu'un cinquième du diamètre moyen de grain, de préférence en particulier de dimension aussi grande que le diamètre moyen de grain des parcelles (16) du matériau en vrac (8).

10. Dispositif selon la revendication 6, caractérisé par le fait que la surface intérieure (3) à rugosité macroscopique de la paroi (2) est formée par un profilage (19) d'une tôle gaufrée (27) ou d'une tôle à bossages (28).

11. Dispositif selon la revendication 6, caractérisé par le fait que la surface intérieure (3) à rugosité macroscopique de la paroi (2) est formée par un profilage (19) d'une tôle perforée (30) ou d'une tôle à persiennes ou d'un grillage déployé (32) qui est fixé dans une zone partielle (29) de la partie en forme de fût (4) au moyen d'une liaison par rivets (24) ou d'une liaison par soudage (25).

12. Dispositif selon la revendication 8 ou 9, caractérisé par le fait que la surface intérieure (3) de la paroi (2) forme une surface latérale d'un cylindre circulaire et que la zone partielle (29) est un tronçon (35) de cette surface latérale.

13. Dispositif selon la revendication 7 et 12, caractérisé par le fait que le tronçon (35) se trouve à une distance de la partie en forme d'entonnoir (5) qui est inférieure au diamètre du cylindre circulaire.
